# EUROPEAN PATENT APPLICATION

(11) **EP 4 831 224 A1**
(43) Date of publication of application: **28.10.2026**
(21) Application number: 26167373.5
(22) Date of filing: 24.03.2026
(51) Int. Cl.: C08J 3/22, C08L 7/00

(54) **ELASTOMER COMPOSITES PRODUCED FROM SUSTAINABLE FILLERS AND METHODS FOR MAKING AND USING THE SAME**

(30) Priority: 27.03.2025 US 202563778486 P; 23.03.2026 US 202619575254
(71) Applicant: The Goodyear Tire & Rubber Company, Akron, OH 44316 (US)
(72) Inventor: DENNIS-PELCHER, Robert Vincent, Uniontown, 44685 (US); HUA, Kuo-Chih, Richfield, 44286 (US); MA, Liqing, Uniontown, 44685 (US); Dent, Peter Isaac, Akron, 44316 (US)
(74) Representative: Leslie, Edward

(57) **Abstract**

An elastomer composite comprising a carbon material derived from a carbon oxide compound uniformly dispersed in an elastomer is disclosed. Also, a method for producing an elastomer composite comprising a carbon material derived from the carbon oxide is disclosed, the method comprising admixing an elastomer with the carbon material derived from the carbon oxide, wherein the carbon material derived from the carbon oxide is uniformly dispersed in the elastomer.

## Description

### BACKGROUND

Fillers such as carbon black are widely used to produce rubber compositions for the manufacture of tires and other articles. In the case of large scale production, there is always a desire to use environmentally sustainable materials that will ultimately have little to no long term impact on the environment. However, when selecting such materials, the chemical and physical properties of the rubber compositions cannot be compromised. Thus, there is a need for a sustainable processes that produce rubber compositions with satisfactory performance properties.

### SUMMARY OF THE INVENTION

The invention relates to an elastomer composite in accordance with claim 1, to a vulcanized elastomer composite in accordance with claim 11, to an article in accordance with claim 13, and to a method for producing an elastomer composite in accordance with claim 14.

Dependent claims refer to preferred embodiments of the invention.

In accordance with the purpose(s) of the present invention, as embodied and broadly described herein, are elastomer composites and methods for producing elastomer composites in a sustainable manner. In one aspect, the elastomer composites include a carbon material derived from a carbon oxide compound uniformly dispersed in an elastomer. The elastomer composites described herein once vulcanized have comparable or improved performance properties when compared to elastomers prepared from traditional fillers and methods. The vulcanized elastomer composites described herein can be components used in the production of tires and other articles.

### DETAILED DESCRIPTION OF PREFERRED EMBODIMENTS OF THE INVENTION

As will be apparent to those of skill in the art upon reading this invention, each of the individual embodiments described and illustrated herein has discrete components and features which may be readily separated from or combined with the features of any of the other several embodiments without departing from the scope or spirit of the present invention.

Any recited method can be carried out in the order of events recited or in any other order that is logically possible. That is, unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

Prior to describing the various aspects of the present invention, the following definitions are provided and should be used unless otherwise indicated. Additional terms may be defined elsewhere in the present invention.

### DEFINITIONS

As used herein, "comprising" is to be interpreted as specifying the presence of the stated features, integers, steps, or components as referred to, but does not preclude the presence or addition of one or more features, integers, steps, or components, or groups thereof. Further, the term "comprising" is intended to include examples and aspects encompassed by the terms "consisting essentially of" and "consisting of." Similarly, the term "consisting essentially of" is intended to include examples encompassed by the term "consisting of.

As used in the specification and the appended claims, the singular forms "a," "an" and "the" include plural referents unless the context clearly dictates otherwise. Thus, for example, reference to "a plasticizer" include, but are not limited to, mixtures or combinations of two or more such plasticizers, and the like.

It should be noted that ratios, concentrations, amounts, and other numerical data can be expressed herein in a range format. It will be further understood that the endpoints of each of the ranges are significant both in relation to the other endpoint, and independently of the other endpoint.

As used herein, the term "phr" refers to parts by weight of a respective material per 100 parts by weight of rubber or elastomer. In general, using this convention, an elastomer composition is comprised of 100 parts by weight of rubber/elastomer. The claimed composition may comprise other rubbers/elastomers than explicitly mentioned in the claims, provided that the phr value of the claimed rubbers elastomers is in accordance with claimed phr ranges and the amount of all rubbers/elastomers in the composition results in total in 100 parts of rubber.

The terms "rubber" and "elastomer" may be used herein interchangeably, unless indicated otherwise.

As used herein, the term "uncured elastomer composite" refers to a composition including at least one natural or synthetic rubber component and, optionally, one or more fillers, processing aids, or additional ingredients, that has not been vulcanized. Uncured rubber is sensitive to changes in temperature and has a tendency to undergo "cold flow" (slow movement or deformation under stress) over time. In some aspects, the uncured rubber composition is a masterbatch.

As used herein, the term "vulcanized elastomer composite" refers to a rubber composition obtained by taking an uncured composition as described herein and curing or vulcanizing it, often accomplished using sulfur compounds and/or other curing additives and in the presence of heat. Vulcanized or cured rubber does not undergo cold flow and is less sensitive to changes in temperature relative to uncured rubber. In another aspect, rubber compositions can be cured in molds in order to form finished articles including, but not limited to, tires.

Unless otherwise specified, pressures referred to herein are based on atmospheric pressure (i.e. one atmosphere).

### Elastomer Composites and Methods for Producing the Same

Described herein are elastomer composites produced from sustainable materials. **In** one aspect, the elastomer composites include a carbon material produced from carbon oxides that are abundant in nature.

In one embodiment, the carbon material is derived from a carbon oxide such as, for example, carbon monoxide and carbon dioxide. Carbon oxides are abundant gases that may be extracted from point source emissions, such as the exhaust gases of hydrocarbon combustion, and from some process off gases. Carbon dioxide may also be extracted from the air. Because point source emissions have much higher concentrations of carbon dioxide than air, they are often economical sources from which to harvest the carbon dioxide. However, the immediate availability of air may provide cost offsets by eliminating transportation costs through local manufacturing of the solid carbon products from carbon dioxide in air.

In one embodiment, the carbon material is produced by the catalytic conversion of a carbon oxide. In one aspect, the carbon material derived from a carbon oxide compound is a carbon oxide gas that has been reduced. For example, carbon oxide gas can be contacted with a reducing agent gas stream in the presence of a catalyst to produce the carbon material. In one aspect, the reducing agent is a hydrocarbon gas (e.g., natural gas, methane, etc.), hydrogen (H2) gas or a mixture thereof. Not wishing to be bound by theory, a hydrocarbon gas serves the dual function as both an additional carbon source and as the reducing agent for the carbon oxides. In another aspect, the reducing agent is syngas. Syngas includes primarily carbon monoxide (CO) and hydrogen (H2) so that the gas has both the carbon oxide and the reducing gas in mixture.

In one embodiment, the carbon material derived from a carbon oxide gas is produced by the method comprising (a) mixing the carbon oxide gas and a reducing gas stream to form a reaction gas mixture and (b) injecting the reaction gas mixture into reaction zone in the presence of a catalyst, wherein the catalyst reacts with the reaction mixture to form the carbon material derived from a carbon oxide gas. The type, purity, and homogeneity of solid carbon product are controlled by the reaction conditions (time, temperature, pressure, partial pressure of reactants) and the catalyst (including the size, method of formation, and form of the catalyst). Exemplary methods for producing the carbon materials described herein are disclosed in US Patent No. 9,556,031.

In one embodiment, the catalyst includes atoms of a transition metal selected from the group consisting of Group VI metals, Group VII metals, and mixtures thereof. In another aspect, the catalyst includes a metal oxide compound selected from the group consisting of beryllium oxide, magnesium oxide, calcium oxide, strontium oxide and barium oxide.

In embodiment aspect, the catalyst is formed from a catalyst precursor. Catalyst precursors are compounds containing the metals noted to be effective catalysts. For example, some of the metals noted as effective catalysts occur as metallocenes (e.g. ferrocene), as carbonyls (e.g., cobalt carbonyl), as oxides (e.g., iron oxides aka rust), etc., that decompose at temperatures below the reaction temperatures. A wide range of suitable compounds will occur to the skilled practitioner in selecting catalyst precursors and creating mixtures of catalyst precursors that result in the desired catalyst upon decomposition.

The sustainable carbon materials used to produce the elastomer composites described herein can exist in several forms. For example, the carbon material can include, but is not limited to, graphite including pyrolytic graphite, graphene, carbon black, fibrous carbon, buckminister fullerenes including buckyballs, single wall carbon nanotubes, and multi-wall carbon nanotubes. **In** one aspect, the carbon material is carbon black manufactured by Seerstone Development LLC.

In one embodiment, the elastomer composite is produced by admixing a slurry of an elastomer with a slurry of the carbon material. This process is referred to herein as "liquid processing." This process is distinguishable over dry mixing, where the elastomer and carbon material are mixed together in dry form. Liquid processing ensures that the carbon material is uniformly dispersed throughout the elastomer such that the concentration of the carbon is equivalent (i.e., ±5%) throughout the elastomer composite.

In one embodiment, the elastomer composite is produced by reacting a continuous flow of first fluid comprising the elastomer with a continuous flow of second fluid comprising the carbon material derived from the carbon oxide to form a mixture with the elastomer and produce the elastomer composite. In another aspect, the elastomer composite is produced by the method comprising:
feeding a continuous flow of first fluid comprising the elastomer to a reactor comprising a mixing zone and a discharge end;
feeding a continuous flow of second fluid comprising the carbon material derived from the carbon oxide to the mixing zone of the reactor to the elastomer composite, wherein the elastomer composite is passed as a continuous flow to the discharge end; and
discharging the elastomer composite from the discharge end of the reactor.

US Patent No. 6,048,923, which provides exemplary methods for producing the elastomer composite.

In one embodiment, the elastomer composite is produced by feeding simultaneously the carbon material and an elastomer latex fluid into a mixing zone of a coagulum reactor. A coagulum zone extends from the mixing zone, preferably progressively increasing in cross-sectional area in the downstream direction from an entry end to a discharge end. The particulate filler fluid is fed to the mixing zone preferably as a continuous, high velocity jet of injected fluid, while the latex fluid is fed at low velocity. The velocity, flow rate and particulate concentration of the particulate filler fluid are sufficient to cause mixture with high shear of the latex fluid and flow turbulence of the mixture within at least an upstream portion of the coagulum zone so as to substantially completely coagulate the elastomer latex with the particulate filler prior to the discharge end.

Suitable elastomer latex fluids include both natural and synthetic elastomer latices and latex blends. Exemplary elastomers include, but are not limited to, rubbers, polymers (e.g., homopolymers, copolymers and/or terpolymers) of 1,3-butadiene, styrene, isoprene, isobutylene, 2,3-dimethyl-1,3-butadiene, acrylonitrile, ethylene, and propylene and the like.

The elastomer preferably has a glass transition temperature (Tg) as measured by differential scanning calorimetry (DSC) ranging from -120°C to 0°C. Examples include, but are not limited to, styrene-butadiene rubber (SBR), natural rubber and its derivatives such as chlorinated rubber, polybutadiene, polyisoprene, poly(styrene-co-butadiene) and the oil extended derivatives of any of them. Blends of any of the foregoing may also be used.

The latex may be in an aqueous carrier liquid. Alternatively, the liquid carrier may be a hydrocarbon solvent. In any event, the elastomer latex fluid must be suitable for controlled continuous feed at appropriate velocity, pressure and concentration into the mixing zone. Particular suitable synthetic rubbers include: copolymers of styrene and butadiene; polymers and copolymers of conjugated dienes such as polybutadiene, polyisoprene, polychloroprene, and the like, and copolymers of such conjugated dienes with an ethylenic group-containing monomer copolymerizable therewith such as styrene, methyl styrene, chlorostyrene, acrylonitrile, 2-vinylpyridine, 5-methyl-2-vinylpyridine, 5-ethyl-2-vinylpyridine, 2-methyl-5-vinylpyridine, alkylsubstituted acrylates, vinyl ketone, methyl isopropenyl ketone, methyl vinyl either, alpha methylene carboxylic acids and the esters and amides thereof such as acrylic acid and dialkylacrylic acid amide. Also suitable for use herein are copolymers of ethylene and other high alpha olefins such as propylene, butene-1 and pentene-1.

Where the elastomer is a natural rubber latex, the natural rubber latex can include field latex or latex concentrate (produced, for example, by evaporation, centrifugation or creaming). The latex is provided typically in an aqueous carrier liquid. Alternatively, the liquid carrier may be a hydrocarbon solvent.

The amount of carbon material mixed with the elastomer can vary depending upon the intended use of the elastomer composite. In one aspect, the carbon material is from 20 phr to 120 phr of elastomer composite. In another aspect, the carbon material is from 20 phr, 30 phr, 40 phr, 50 phr, 60 phr, 70 phr, 80 phr, 90 phr, 100 phr, 110 phr, or 120 phr of elastomer composite, where any value can be a lower and upper endpoint of a range (e.g., 50 phr to 80 phr).

The elastomer composite can include one or more additives typically used to produce rubber compositions. In one aspect, the additive can be added to a slurry of the elastomer prior to mixing with the slurry of the carbon material. In another aspect, the additive can be added to a slurry of the carbon material prior to mixing the with the slurry of the elastomer. In another aspect, the additive can be added to a slurry of elastomer and carbon material.

In one embodiment, the additive can be silica. In one aspect, the silica can be obtained by the acidification of a soluble silicate, e.g., sodium silicate. In one embodiment, the uncured composition includes 85 to 95 phr or 90 phr of the precipitated silica. Conventional silicas can be characterized by a Brunauer-Emmett-Teller (BET) surface area, as measured using nitrogen gas. In one aspect, the BET surface area can be in the range of 150 m2/g to 165 m2/g or 160 m2/g. The BET method of measuring surface area is described in the Journal of the American Chemical Society, Volume 60, Page 304 (1930). In one embodiment, the conventional silica can have an average ultimate particle size in the range of 0.01 µm to 0.05 µm as determined by an electron microscope. In other embodiments, the silica particles are smaller than 0.01 µm. In other aspects, the silica particles are larger than 0.05 µm.

Exemplary untreated precipitated silicas are available from PPG Industries as Hi-Sil^{™}, e.g., under the designations 210, 243, 315, EZ 160G-D, EZ 150G, 190G, 200G-D, HDP-320G, and 255CG-D; from Solvay as Zeosil^{™}, under the designations 115GR, 125GR, 165GR, 175GR, 185GR, 195GR, 1085GR, 1165MP, 1115MP, HRS 1200MP, Premium MP, Premium 200MP, and 195HR; from Evonik as Ultrasil^{™}, under the designations VN2, VN3, VN3GR, 5000GR, 7000GR, 9000GR, as Zeopol^{™}, under the designations 8755LS and 8745; from Wuxi Quechen Silicon Chemical Co., Ltd. as Newsil^{™}, under the designations 115GR and 2000MP; from Maruo Calcium Co., Ltd., as Tokusil^{™} 315, and silicas derived from rice husk ash from Yihai Food and Oil Industry, China. Any precipitated silica can be used in the method. In other embodiments, the untreated precipitated silica is prepared as a wet filtered material shortly before use.
In another embodiment, the silica may be pre-hydrophobated (or pre-silanized) precipitated silica. By pre-hydrophobated, it is meant that the silica is pretreated, i.e., the pre-hydrophobated precipitated silica is hydrophobated prior to its addition to the rubber composition by treatment with at least one silane. Suitable silanes include but are not limited to alkylsilanes, alkoxysilanes, organoalkoxysilyl polysulfides and organomercaptoalkoxysilanes. In an alternative embodiment, the pre-hydrophobated precipitated silica may be pre-treated with a silica coupling agent comprised of, for example, an alkoxyorganomercaptoalkoxysilane or combination of alkoxysilane and organomercaptoalkoxysilane prior to blending the pre-treated silica with the rubber instead of reacting the precipitated silica with the silica coupling agent in situ within the rubber. For example, see U.S. Pat. No. 7,214,731. The pre-hydrophobated precipitated silica may optionally be treated with a silica dispersing aid. Such silica dispersing aids may include glycols such as fatty acids, diethylene glycols, polyethylene glycols, fatty acid esters of hydrogenated or non-hydrogenated C5 or C6 sugars, and polyoxyethylene derivatives of fatty acid esters of hydrogenated or non-hydrogenated C5 or C6 sugars. Exemplary fatty acids include stearic acid, palmitic acid and oleic acid. Exemplary fatty acid esters of hydrogenated and non-hydrogenated C5 and C6 sugars (e.g., sorbose, mannose, and arabinose) include, but are not limited to, the sorbitan oleates, such as sorbitan monooleate, dioleate, trioleate and sesquioleate, as well as sorbitan esters of laurate, palmitate and stearate fatty acids. Exemplary polyoxyethylene derivatives of fatty acid esters of hydrogenated and non-hydrogenated C5 and C6 sugars include, but are not limited to, polysorbates and polyoxyethylene sorbitan esters, which are analogous to the fatty acid esters of hydrogenated and non-hydrogenated sugars noted above except that ethylene oxide groups are placed on each of the hydroxyl groups. Optional silica dispersing aids if used are present in an amount ranging from 0.1% to 25% by weight based on the weight of the silica, with 0.5% to 20% by weight being suitable, and 1% to 15% by weight based on the weight of the silica also being suitable. For various pre-treated precipitated silicas see, for example, U.S. Pat. Nos. 4,704,414, 6,123,762, and 6,573,324.

In one embodiment, the additive is a plasticizer. In one aspect, the plasticizer is a hydrocarbon resin having a Tg greater than 30°C, preferably greater than 50°C, and more preferably greater than 60°C and less than 100°C, such as hydrocarbon resins described in "Hydrocarbon Resins" by R. Mildenberger, M. Zander and G. Collin (New York , VCH, 1997, ISBN-3-527-28617-9). Representative hydrocarbon resins include for instance coumarone-indene-resins, petroleum resins, terpene resins, alphamethyl styrene resins and mixtures thereof.

Coumarone-indene resins are commercially available in many forms with melting points ranging from 10°C to 160°C, preferably from 30°C to 100°C as measured by the ball-and-ring method). Coumarone-indene resins as such are well known. Various analysis indicate that such resins are largely polyindene; however, typically contain random polymeric units derived from methyl indene, coumarone, methyl coumarone, styrene and methyl styrene.

Petroleum resins are commercially available with softening points ranging from 10°C to 120°C, preferably from 30°C to 100°C. Suitable petroleum resins include both aromatic and nonaromatic types. Several types of petroleum resins are available. Some resins have a low degree of unsaturation and high aromatic content, whereas some are highly unsaturated and yet some contain no aromatic structure at all. Differences in the resins are largely due to the olefins in the feedstock from which the resins are derived. Conventional derivatives in such resins include dicyclopentadiene, cyclopentadiene, their dimers and diolefins such as isoprene and piperylene. In one aspect, the hydrocarbon resin is OpperaTM PR383 manufactured by Exxon Mobil, which is a hydrogenated C9 modified dicyclopentadiene having a Tg of 54 oC.

In one embodiment, terpene resins can be used as the hydrocarbon resin. Terpene polymers (or resins) may be typically commercially produced from polymerizing alpha or beta pinenes. In particular, alpha pinene based resins may be used. Terpene resins may be supplied in a variety of melting points ranging from 10°C to 135°C. The terpene resins may for example have a molecular weight Mw of less than 1000 g/mol, preferably less than 950 g/mol or ranging between 200 g/mol and 950 g/mol, as measured by gel permeation chromatography (GPC). An example of an alpha pinene based resin is Dercolyte^{™} A 115 of the company DRT which has a molecular weight Mw of 900 g/mol.

In one embodiment, the hydrocarbon resin is derived from styrene and alphamethylstyrene. The presence of the styrene/alphamethylstyrene resin with a rubber blend which contains the presence of the styrene-butadiene elastomer is considered herein to be beneficial because of observed viscoelastic properties of the tread rubber composition such as complex and storage modulus, loss modulus, tangent delta and loss compliance at different temperature/frequency/strain. The properties of complex and storage modulus, loss modulus, tangent delta and loss compliance are understood to be generally well known to those having skill in such art. The molecular weight distribution of the resin is visualized as a ratio of the resin's molecular weight average (Mw) to molecular weight number average (Mn) values and is considered herein to be in a range of 1.5/1 to 2.5/1 which is considered to be a relatively narrow range. This is believed to be advantageous because of the selective compatibility with the polymer matrix and because of a contemplated use of the tire in wet and dry conditions over a wide temperature range. The glass transition temperature Tg of the copolymer resin is considered herein to be in a range of 20°C to 100°C, alternatively 50°C to 70°C. The measurement of Tg for resins is done by DSC according to ASTM D6604 or equivalent. The styrene/alphamethylstyrene resin is considered herein to be a copolymer of styrene and alphamethylstyrene with a styrene/alphamethylstyrene molar ratio in a range of 0.40 to 1.50. In one embodiment, such a resin can be suitably prepared, for example, by cationic copolymerization of styrene and alphamethylstyrene in a hydrocarbon solvent. Thus, the contemplated styrene/alphamethylstyrene resin can be characterized, for example, by its chemical structure, namely, its styrene and alphamethylstyrene contents and softening point and also, if desired, by its glass transition temperature, molecular weight and molecular weight distribution. In one embodiment, the styrene/alphamethylstyrene resin is composed of 40 to 70 percent units derived from styrene and, correspondingly, 60 to 30 percent units derived from alphamethylstyrene. In one embodiment, the styrene/alphamethylstyrene resin has a softening point according to ASTM No. E-28 in a range of 80°C to 145°C. Suitable styrene/alphamethylstyrene resin is available commercially as Resin 2336 from Eastman or Sylvares SA85 from Arizona Chemical.

In one embodiment, the additive is a sulfur donor. Representative examples of sulfur donors include elemental sulfur (free sulfur), an amine disulfide, polymeric polysulfide and sulfur olefin adducts. In one aspect, the sulfur-vulcanizing agent is elemental sulfur. The sulfur donor may for instance be used in an amount ranging from 0.5 phr to 8 phr, alternatively with a range of from 1 phr to 3 phr.

In one embodiment, the additive is an antioxidant (also referred to as an antidegradant). Representative antioxidants may be, for example, diphenyl-p-phenylenediamine and others, such as, for example, those disclosed in The Vanderbilt Rubber Handbook (1978), Pages 344 through 346. Typical amounts of antioxidants, if used, may for example include 1 phr to 5 phr.

In one embodiment, the additive is an antiozonant. Representative antiozonants include, but are not limited to, N-phenyl-N'-(1,3-dimethylbutyl)-p-phenylenediamine (6PPD) and N,N'-o-tolyl-p-phenylenediamine (DTPD). Typical amounts of antiozonants, if used, may for instance comprise 1 phr to 5 phr. In some aspects, antiozonants are included in amounts of 1 phr to 5 phr.

In one embodiment, the additive is a fatty acid. Typical amounts of fatty acids, if used, which can include stearic acid in an amount of 0.5 phr to 3 phr.

In one embodiment, the additive is a wax. Typical amounts of waxes, if used, may include 1 phr to 5 phr.

In one embodiment, the additive is zinc oxide. Typical amounts of zinc oxide, if used, may include 1 phr to 5 phr.

In certain embodiment, accelerators can be used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 phr to 4 phr, alternatively 0.8 phr to 1.5 phr. In another embodiment, combinations of a primary and a secondary accelerator might be used with the secondary accelerator being used in smaller amounts, such as from 0.05 phr to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are for instance amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be for instance a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

In one embodiment, the additive is an oil. Examples of such oils include, but are not limited to, aromatic, paraffinic, naphthenic, and low PCA oils, such as MES, TDAE, SRAE and heavy naphthenic oils. PCA oils may include those having a polycyclic aromatic content of less than 3 percent by weight as determined by the IP346 method. The oil may be a vegetable oil or vegetable oil derivate (such as sunflower oil, soybean oil or canola oil) or a blend of multiple oils, in particular sunflower oils. Some representative examples of vegetable oils that can be used include soybean oil, sunflower oil, canola (rapeseed) oil, corn oil, coconut oil, cottonseed oil, olive oil, palm oil, peanut oil, and safflower oil.

After the elastomer composite has been prepared, it is vulcanized to produce a vulcanized elastomer composite. In one aspect, vulcanization can be carried out at temperatures ranging from 100°C to 200°C or 110°C to 180°C. Vulcanization processes can include heating in a press or mold or heating with superheated steam or hot air. The vulcanized elastomer composite can be built, shaped, or molded into any desired shape or article.

In one embodiment, the vulcanized elastomer composite is a component of a tire such as, for example, a tread, tire sub-tread, base, sidewall, wire-skim or any combination thereof. In one aspect, the tire may be a radial tire, a pneumatic tire, a non-pneumatic tire, a truck tire and a passenger car tire. The tire may for instance be a winter tire and/or may have a three peak mountain snowflake symbol. Thus, the tire may have a plurality of tread blocks having a plurality of sipes.

The elastomer composites described herein once vulcanized have comparable or improved performance properties when compared to elastomers prepared from traditional fillers and methods. In one aspect, the vulcanized elastomer composites have one or more properties that are comparable or improved when compared to an elastomer composite produced from furnace carbon black such as, for example, N234 or N326. In one aspect, the vulcanized elastomer composite exhibits the compound performance characteristics that are similar to composite using a furnace carbon black, wherein that furnace carbon black has a surface area, as defined by ASTM D6556, at least 15% higher than the furnace black that exhibits performance characteristics that are similar to the dry-mix equivalent compound utilizing the same carbon black derived from carbon oxide as the elastomer composite.

In another embodiment, the vulcanized elastomer composites produced from liquid processing as described herein have one or more properties that are comparable or improved when compared to an elastomer composite produced from dry mixing. In one aspect, the vulcanized elastomer composite produced from liquid processing has a Z value that is at least 15% higher than the Z value of the same vulcanized elastomer composite produced by dry processing.

The dispersion of filler in an elastomeric matrix can be represented by the Z value, which is measured, after crosslinking, according to the method described by S. Otto et al. in Kautschuk Gummi Kunststoffe, 58th edition, NR 7-8/2005, in agreement with the standard ISO 11345.

The calculation of the Z value is based on the percentage of surface area in which the filler is not dispersed ("% undispersed surface area"), as measured by the "disperGRADER+" machine provided with its operating process and its "disperDATA" operating software by Dynisco, according to the equation: $Z = 100 - \left(% undispersed surface area\right) / 0.35$

The percentage of undispersed surface area is, itself, measured by a camera that observes the surface area of the sample under incident light at 30°. The light points are associated with the filler and agglomerates, whilst the dark points are associated with the rubber matrix; digital processing converts the image into a black and white image, and enables the determination of the percentage of undispersed surface area, as described by S. Otto in the aforementioned document.

The higher the Z value, the better the dispersion of the filler in the elastomeric matrix (a Z value of 100 corresponding to a perfect dispersion and a Z value of 0 to a mediocre dispersion). A Z value greater than or equal to 80 will be considered to correspond to a surface area having a very good dispersion of the filler in the elastomeric matrix.

### EMBODIMENTS

The present invention can be described in accordance with the following numbered embodiments.

Embodiment 1. An elastomer composite comprising a carbon material derived from a carbon oxide compound uniformly dispersed in an elastomer.

Embodiment 2. The elastomer composite of Embodiment 1, wherein the carbon oxide compound comprises carbon dioxide, carbon monoxide, or a combination thereof.

Embodiment 3. The elastomer composite of Embodiment 1 or 2, wherein the carbon material derived from a carbon oxide compound comprises a carbon oxide gas that has been reduced.

Embodiment 4. The elastomer composite of any one of Embodiment 1-3, wherein the carbon material derived from a carbon oxide compound is produced by contacting the carbon oxide gas with a reducing agent gas stream in the presence of a catalyst.

Embodiment 5. The elastomer composite of Embodiment 4, wherein the reducing agent gas stream comprises hydrogen or a hydrocarbon gas.

Embodiment 6. The elastomer composite of Embodiment 5, wherein the hydrocarbon gas comprises natural gas or synthesis gas.

Embodiment 7. The elastomer composite of Embodiment 5, wherein the hydrocarbon gas comprises methane.

Embodiment 8. The elastomer composite of any one of Embodiment 4-7, wherein the catalyst comprises atoms of a transition metal selected from the group consisting of Group VI metals, Group VII metals, and mixtures thereof.

Embodiment 9. The elastomer composite of any one of Embodiment 4-7, wherein the catalyst comprises a metal oxide compound selected from the group consisting of beryllium oxide, magnesium oxide, calcium oxide, strontium oxide and barium oxide.

Embodiment 10. The elastomer composite of Embodiment 1, wherein the carbon material derived from a carbon oxide gas is produced by the method comprising (a) mixing the carbon oxide gas and a reducing gas stream to form a reaction gas mixture and (b) injecting the reaction gas mixture into reaction zone in the presence of a catalyst, wherein the catalyst reacts with the reaction mixture to form the carbon material derived from a carbon oxide gas.

Embodiment 11. The elastomer composite of any one of Embodiments 1-10, wherein the elastomer composite is produced by the method comprising reacting a continuous flow of first fluid comprising the elastomer with a continuous flow of second fluid comprising the carbon material derived from the carbon oxide to form a mixture with the elastomer and produce the elastomer composite.

Embodiment 12. The elastomer composite of any one of Embodiment 1-10, wherein the elastomer composite is produced by the method comprising:
(a) feeding a continuous flow of first fluid comprising the elastomer to a reactor comprising a mixing zone and a discharge end;
(b) feeding a continuous flow of second fluid comprising the carbon material derived from the carbon oxide to the mixing zone of the reactor to the elastomer composite, wherein the elastomer composite is passed as a continuous flow to the discharge end; and
(c) discharging the elastomer composite from the discharge end of the reactor.

Embodiment 13. The elastomer composite of Embodiment 11 or 12, wherein the carbon material derived from the carbon oxide is ground prior to admixing with the elastomer.

Embodiment 14. The elastomer composite of any one of Embodiments 1-13, wherein the elastomer comprises natural rubber, a chlorinated derivative of natural rubber, or a homopolymer, copolymer or terpolymer of butadiene, styrene, isoprene, isobutylene, 2,3-dialkyl-1, 3-butadiene where the alkyl group is C1 to C3 alkyl, acrylonitrile, ethylene or propylene.

Embodiment 15. The elastomer composite of any one of Embodiments 1-14, wherein the method does not comprise admixing an additive with the elastomer and the carbon material derived from the carbon oxide.

Embodiment 16. The elastomer composite of any one of Embodiments 1-14, wherein the method further comprises admixing at least one additive with the elastomer and the carbon material derived from the carbon oxide.

Embodiment 17. The elastomer composite of Embodiment 16, wherein the at least one additive is selected from the group consisting of an antiozonant, an antioxidant, a plasticizer, a processing aid, a resin, a flame retardant, an extender oil, a lubricant, and any combination thereof.

Embodiment 18. The elastomer composite of any one of Embodiments 1-17, wherein the carbon material derived from the carbon oxide is from 20 phr to 120 phr of elastomer composite.

Embodiment 19. A vulcanized elastomer composite comprising the elastomer composite of any one of Embodiments 1-18 that has been vulcanized.

Embodiment 20. The vulcanized elastomer composite of Embodiment 19, wherein the vulcanized elastomer composite exhibits one or more performance characteristics that are similar to a composite comprising furnace carbon black, wherein the furnace carbon black has a surface area as defined by ASTM D6556 that is at least 15% greater than the furnace carbon black that exhibits performance characteristics that are similar to the dry-mix equivalent compound utilizing the same carbon black derived from carbon oxide as the elastomer composite.

Embodiment 21. The vulcanized elastomer composite of Embodiment 19, wherein when the elastomeric composite is produced by a liquid process, the elastomeric composite has a Z value that is at least 15% greater than the Z value of an elastomeric composite produced by a dry-mix process using the same amount of carbon material derived from a carbon oxide compound.

Embodiment 22. An article comprising the vulcanized elastomer composite of Embodiment 19.

Embodiment 23. The article of Embodiment 22, wherein the article comprises a tire or a component of a tire.

Embodiment 24. The article of Embodiment 23, wherein the component of the tire comprises a tire tread, a tire sub-tread, a wire-skim for a tire, a tire sidewall, or a cushion gum for a re-tread tire.

Embodiment 25. A method for producing an elastomer composite comprising a carbon material derived from the carbon oxide, the method comprising admixing an elastomer with the carbon material derived from the carbon oxide, wherein the carbon material derived from the carbon oxide is uniformly dispersed in the elastomer.

Now having described the present invention in general, the following Examples describe some additional aspects of the present invention.

### EXAMPLES

Elastomer composites were prepared according to the formulations shown in Table 1, with amounts given in phr. Referring to Table 1, the control composition R1 was prepared with a furnace carbon black (N326). Samples C1 and C2 were prepared by dry processing using the process in Example B of US Patent No. 6,048,923. Samples I1 and I2 were prepared by liquid processing using the process in Example A of US Patent No. 6,048,923, with the exception that the slurry was not homogenized.

**Table 1**

| Material | R1 | C1 | I1 | C2 | I2 |
|---|---|---|---|---|---|
| NR1 | 100 | 100 | 12.8 | 100 | 0 |
| ASTM Carbon Black2 | 47 | 0 | 0 | 0 | 0 |
| CO2-Derived Carbon Black3 | 0 | 54 | 1 | 62 | 1.2 |
| NR/Carbon Black Masterbatch4 | 0 | 0 | 133.2 | 0 | 152.8 |
| Antidegradants5 | 3 | 3 | 3 | 3 | 3 |
| Waxes | 1.5 | 1.5 | 1.5 | 1.5 | 1.5 |
| Sulfur | 2.1 | 2.1 | 2.1 | 2.1 | 2.1 |
| Accelerators6 | 1.1 | 1.1 | 1.1 | 1.1 | 1.1 |
| Stearic Acid | 2 | 2 | 2 | 2 | 2 |
| Zinc Oxide | 3 | 3 | 3 | 3 | 3 |

| | | | | | |
|---|---|---|---|---|---|
| 1. TSR-20 Natural Rubber 2. N326 Carbon Black 3. CO2-Derived Carbon Black from Seerstone: ~15% Ash 4. Liquid-Phase Mixed Masterbatch of NR latex and CO2-Derived CB in 3~6% Ash 5. Mixed p-phenylene diamine type 6. Sulfenamide type | | | | | |

The compounds were cured and physical properties tested, with the results provided in Table 2.

Table 2 discloses mechanical test results for the Reference composition R1, two control compositions C1 and C2, and two corresponding inventive compositions I1 and I2. It is known that carbon blacks with higher specific surface area and/or structure can produce vulcanized rubber composites with higher levels of reinforcement as well as hysteresis.

When comparing C1 to I1, and similarly C2 to I2, it is clear that the inventive compositions demonstrate hysteresis, 300% modulus, tensile strength, and Grosch abrasion performance akin to a carbon black of a higher specific surface area and/or structure, without compromising the ultimate tensile elongation for the compound.

This change is notable as the compositions have the same loading of the same type of carbon black, with C1 and I1 containing the equivalent of ~45PHR carbon black when accounting for ash content, and C2 and I2 containing ~51PHR carbon black.

The reference compound R1 utilizes N326 at ~47PHR, a semi-reinforcing ASTM carbon black grade, and is included to show the directional shift in properties of the compounds containing Carbon-Oxide-derived carbon black, when using the liquid phase masterbatch technique described herein, towards the performance of carbon blacks that provide enough reinforcement to be feasible for applications where more reinforcement is required. For an all carbon black/natural rubber compound in a conventional application in a tire, a tensile strength value of 20MPa would not be sufficient. For example, the tread or base of a radial truck tire with a tensile strength of only 20MPa would not provide the level of toughness needed from the rubber compound in this application. The use of the invention disclosed herein elevates the tensile strength, and consequently the toughness, of the rubber compounds with the same material composition towards a level where they could be viable in such applications.

**Table 2**

| Test | R1 | C1 | I1 | C2 | I2 |
|---|---|---|---|---|---|
| Elongation at Break (%) 1 | 535 | 451 | 455 | 388 | 421 |
| 300% Modulus (MPa) 1 | 11.32 | 9.56 | 12.04 | 11.08 | 13.64 |
| Tensile Strength (MPa) 1 | 27.3 | 18.5 | 22.3 | 16.4 | 21.5 |
| Tan Delta at 100°C 2 | 0.126 | 0.076 | 0.103 | 0.103 | 0.128 |
| Abrasion (Grosch) Rating 3 | 100 | 51 | 64 | 57 | 75 |

| | | | | | |
|---|---|---|---|---|---|
| 1. Data obtained from Instron Tensile Tester based on ASTM D638 2. Data obtained with an RPA 2000 Rubber Process Analyzer of Alpha Technologies based on ASTM D5289 3. Data obtained with GVMI LAT100 | | | | | |

## Claims

1. An elastomer composite comprising a carbon material derived from a carbon oxide compound uniformly dispersed in an elastomer.

2. The elastomer composite of claim 1, wherein the carbon oxide compound comprises carbon dioxide, carbon monoxide, or a combination thereof; or wherein the carbon material derived from a carbon oxide compound comprises a carbon oxide gas that has been reduced.

3. The elastomer composite of claim 1 or 2, wherein the carbon material is derived from a carbon oxide compound that is produced by contacting the carbon oxide gas with a reducing agent gas stream in the presence of a catalyst, the reducing agent gas stream preferably comprising hydrogen or a hydrocarbon gas.

4. The elastomer composite of claim 3, wherein the hydrocarbon gas comprises natural gas or synthesis gas or methane.

5. The elastomer composite of claim 3 or 4, wherein the catalyst comprises (i) atoms of a transition metal selected from the group consisting of Group VI metals, Group VII metals, and mixtures thereof; and/or wherein the catalyst comprises a metal oxide compound selected from the group consisting of beryllium oxide, magnesium oxide, calcium oxide, strontium oxide and barium oxide.

6. The elastomer composite of at least one of the previous claims, wherein the carbon material derived from a carbon oxide gas is produced by:
(i) a method comprising (a) mixing the carbon oxide gas and a reducing gas stream to form a reaction gas mixture and (b) injecting the reaction gas mixture into reaction zone in the presence of a catalyst, wherein the catalyst reacts with the reaction mixture to form the carbon material derived from a carbon oxide gas; or
(ii) a method comprising reacting a continuous flow of first fluid comprising the elastomer with a continuous flow of second fluid comprising the carbon material derived from the carbon oxide to form a mixture with the elastomer and produce the elastomer composite; or
(iii) a method comprising (a) feeding a continuous flow of first fluid comprising the elastomer to a reactor comprising a mixing zone and a discharge end; (b) feeding a continuous flow of second fluid comprising the carbon material derived from the carbon oxide to the mixing zone of the reactor to the elastomer composite, wherein the elastomer composite is passed as a continuous flow to the discharge end; and (c) discharging the elastomer composite from the discharge end of the reactor.

7. The elastomer composite of at least one of the previous claims, wherein the carbon material derived from the carbon oxide is ground prior to admixing with the elastomer.

8. The elastomer composite of at least one of the previous claims, wherein the elastomer comprises natural rubber, a chlorinated derivative of natural rubber, or a homopolymer, copolymer or terpolymer of butadiene, styrene, isoprene, isobutylene, or 2,3-dialkyl-1, 3-butadiene, where the alkyl group is C1 to C3 alkyl, acrylonitrile, ethylene or propylene.

9. The elastomer composite of at least one of the previous claims, wherein the at least one additive is selected from the group consisting of an antiozonant, an antioxidant, a plasticizer, a processing aid, a resin, a flame retardant, an extender oil, a lubricant, and any combination thereof.

10. The elastomer composite of at least one of the previous claims, wherein the carbon material derived from the carbon oxide is from 20 phr to 120 phr of elastomer composite.

11. A vulcanized elastomer composite comprising the elastomer composite of at least one of the previous claims that has been vulcanized.

12. The vulcanized elastomer composite of claim 11, wherein, when the elastomeric composite is produced by a liquid process, the elastomeric composite has a Z value that is at least 15% greater than the Z value of an elastomeric composite produced by a dry-mix process using the same amount of carbon material derived from a carbon oxide compound.

13. An article comprising the vulcanized elastomer composite of claim 12, wherein the article preferably is or comprises a tire, a component of a tire tread, a tire sub-tread, a wire-skim for a tire, a tire sidewall, or a cushion gum for a re-tread tire.

14. A method for producing an elastomer composite comprising a carbon material derived from the carbon oxide, the method comprising admixing an elastomer with the carbon material derived from the carbon oxide, wherein the carbon material derived from the carbon oxide is uniformly dispersed in the elastomer.

15. The method of claim 14, wherein the method comprises:
(i) (a) mixing the carbon oxide gas and a reducing gas stream to form a reaction gas mixture and (b) injecting the reaction gas mixture into reaction zone in the presence of a catalyst, wherein the catalyst reacts with the reaction mixture to form the carbon material derived from a carbon oxide gas; or
(ii) reacting a continuous flow of first fluid comprising the elastomer with a continuous flow of second fluid comprising the carbon material derived from the carbon oxide to form a mixture with the elastomer and produce the elastomer composite; or
(iii) (a) feeding a continuous flow of first fluid comprising the elastomer to a reactor comprising a mixing zone and a discharge end; (b) feeding a continuous flow of second fluid comprising the carbon material derived from the carbon oxide to the mixing zone of the reactor to the elastomer composite, wherein the elastomer composite is passed as a continuous flow to the discharge end; and (c) discharging the elastomer composite from the discharge end of the reactor.
